# EUROPEAN PATENT APPLICATION

(11) **EP 4 748 798 A1**
(43) Date of publication of application: **27.05.2026**
(21) Application number: 25215750.8
(22) Date of filing: 13.11.2025
(51) Int. Cl.: C01G 53/504, C01G 53/84, H01M 4/525

(54) **CATHODE ACTIVE MATERIAL FOR SECONDARY BATTERY, CATHODE FOR SECONDARY BATTERY AND LITHIUM SECONDARY BATTERY**

(30) Priority: 19.11.2024 KR 20240165046
(71) Applicant: SK On Co., Ltd., Seoul 03161 (KR)
(72) Inventor: PARK, Hye Jin, 34124 Daejeon (KR); NOH, Mi Jung, 34124 Daejeon (KR); LEE, Yoon Ji, 34124 Daejeon (KR)
(74) Representative: Prüfer & Partner mbB Patentanwälte · Rechtsanwälte

(57) **Abstract**

A cathode active material for a secondary battery includes lithium metal oxide particles. A difference between a maximum particle diameter (Dmax) and an average particle diameter (D50) of the lithium metal oxide particles is in a range from 5 µm to 12 µm. D10 of the lithium metal oxide particles is greater than 1.8 µm and less than 3 µm. D10 and D50 are particle diameter values at 10% and 50% of a cumulative volume of the lithium metal oxide particles, respectively, from analysis results of a volume cumulative particle size distribution of the lithium metal oxide particles by a laser diffraction method.

## Description

### [BACKGROUND OF THE INVENTION]

### 1. Field of the Invention

The present disclosure relates to a cathode active material for a secondary battery, a cathode for a secondary battery and a lithium secondary battery.

### 2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of eco-friendly vehicle such as a hybrid vehicle.

Examples of the secondary battery include a lithium secondary battery, a sodium secondary battery, a potassium secondary battery, a nickel-cadmium battery, a nickel-hydrogen battery, etc. The lithium secondary battery among the secondary batteries is being actively developed due to high operational voltage and energy density per unit weight, a high charging rate, a compact dimension, etc.

For example, the lithium secondary battery may include an electrode assembly including a cathode, an anode, and a separation layer (separator), and an electrolyte impregnating the electrode assembly. The lithium secondary battery may further include an outer packaging material, e.g., a pouch-shaped packaging material, that accommodates the electrode assembly and the electrolyte.

Desirable properties of the lithium secondary battery include high capacity, stability, and enhanced life-span. Thus, introduction of a cathode active material of a single particle structure, a composition modification of a cathode active material layer, etc., were suggested. However, structural transformation of the cathode active material may occur during charging and discharging of the battery to significantly degrade a battery capacity. Thus, a high-capacity cathode having a sufficient life-span is needed.

### [SUMMARY OF THE INVENTION]

According to an aspect of the present disclosure, there is provided a cathode active material for a secondary battery having improved electrochemical properties.

According to an aspect of the present disclosure, there is provided a cathode for a secondary battery including the cathode active material for a secondary battery.

According to an aspect of the present disclosure, there is provided a lithium secondary battery including the cathode for a secondary battery.

A cathode active material for a secondary battery includes lithium metal oxide particles. A difference between a maximum particle diameter (Dmax) and an average particle diameter (D50) of the lithium metal oxide particles is in a range from 5 µm to 12 µm. D10 of the lithium metal oxide particles is greater than 1.8 µm and less than 3 µm. D10 and D50 are particle diameter values at 10% and 50% of a cumulative volume of the lithium metal oxide particles, respectively, from analysis results of a volume cumulative particle size distribution of the lithium metal oxide particles by a laser diffraction method.

In some embodiments, the difference between the Dmax and the D50 of the lithium metal oxide particles may be in a range from 6 µm to 8 µm.

In some embodiments, the D10 of the lithium metal oxide particles may be in a range from 2 µm to 2.6 µm.

In some embodiments, the Dmax of the lithium metal oxide particles may be in a range from 8 µm to 13 µm.

In some embodiments, the D50 of the lithium metal oxide particles may be in a range from 3 µm to 5 µm.

In some embodiments, the D90 of the lithium metal oxide particles may be in a range from 5 µm to 10 µm. D90 is a particle diameter value at 90% of a cumulative volume of the lithium metal oxide particles from the analysis results of the volume cumulative particle size distribution of the lithium metal oxide particles by the laser diffraction method.

In some embodiments, the lithium metal oxide particles may include nickel, and a content of nickel among elements excluding lithium and oxygen contained in the lithium metal oxide particles may be at least 60 mol%.

In some embodiments, the lithium metal oxide particles may further include cobalt. The content of nickel may be 60 mol% or more, and less than 100 mol%, and a content of cobalt may be greater than 0 mol%, and 10 mol% or less among the elements excluding lithium and oxygen contained in the lithium metal oxide particles.

In some embodiments, a tap density of the lithium metal oxide particles may be in a range from 2.1 g/cm³ to 3 g/cm³.

In some embodiments, a pellet density of the lithium metal oxide particles may be in a range from 3.15 g/cm³ to 4 g/cm³.

In some embodiments, the lithium metal oxide particles may have a single particle structure.

A cathode for a secondary battery includes a cathode current collector, and a cathode active material layer on one or both surfaces of the cathode current collector. The cathode active material layer includes the above-described cathode active material for a secondary battery according to claim 1.

A lithium secondary battery includes the above-described cathode for a secondary battery, and an anode opposing the cathode.

A cathode active material for a secondary battery according to embodiments of the present disclosure may be used to provide a cathode having improved capacity and energy density.

The cathode for a secondary battery according to embodiments, and a battery including the cathode may have high capacity and improved charge/discharge efficiency.

### [BRIEF DESCRIPTION OF THE DRAWINGS]

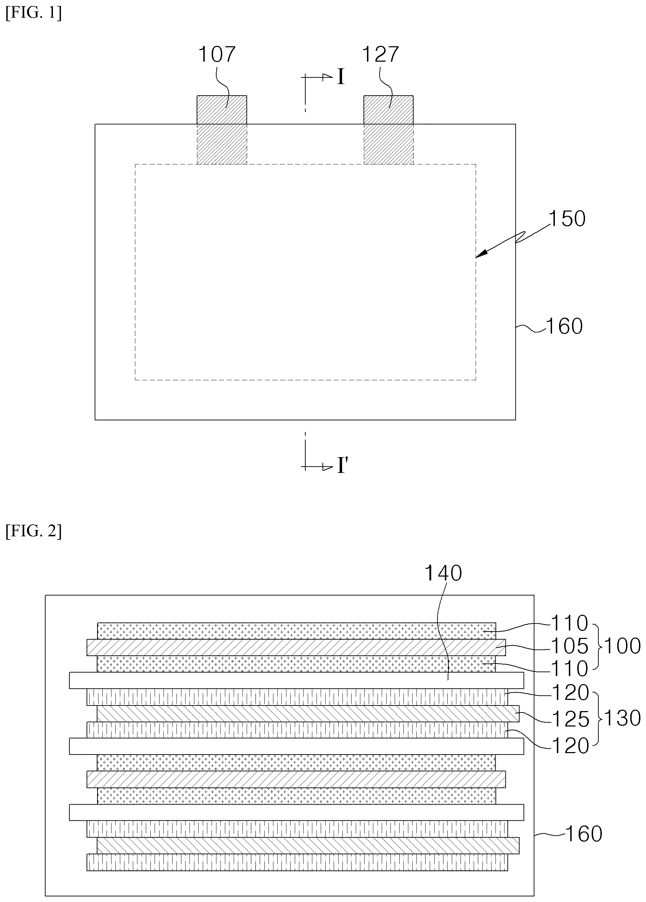

FIGS. 1 and 2 are a schematic plan view and a cross-sectional view, respectively, illustrating a lithium secondary battery in accordance with example embodiments.

### [DETAILED DESCRIPTION OF THE INVENTION]

Embodiments of the present disclosure provide a cathode active material having a proper particle size distribution. Embodiments of the present disclosure provide a cathode for a secondary battery including the cathode active material for a secondary battery and a lithium secondary battery including the cathode.

A cathode active material for a secondary battery according to embodiments of the present disclosure includes lithium metal oxide particles. The lithium metal oxide particles may have a particle size appropriate for improving a capacity and an energy density of the cathode.

The term "D##" as used herein may refer to a particle size at a point corresponding to a cumulative volume ##% in a volume-cumulative particle size distribution of a plurality of particles. For example, D10 and D50 are particle size values at points corresponding to 10% and 50% of the cumulative volume, respectively from an analysis of the volume-cumulative particle size distribution of the lithium metal oxide particles using a laser diffraction. For example, D90 and D100 are particle size values at points corresponding to 90% and 100% of the cumulative volume, respectively, from the analysis of the volume-cumulative particle size distribution of the lithium metal oxide particles using the laser diffraction.

The method of analyzing the volumetric cumulative particle size distribution of the particles is not particularly limited. For example, a laser diffraction particle size analyzer such as S3500 (Microtrac) or MASTERSIZER3000 (Malvern) may be used.

For example, a particle diameter in a range from 0.005 µm to 3000 µm may be measured using the laser diffraction particle size analyzer.

For example, particle sizes of particles having spherical, quasi-spherical, non-spherical or irregular shape may be measured using the laser diffraction particle size analyzer.

A laser used for the particle size analysis is not particularly limited, but 3x red light having a wavelength of approximately 780 nm may be used.

For example, the particle size may be analyzed by irradiating a dispersion containing the lithium metal oxide particles and a solvent with a laser and measuring a diffraction pattern of the laser light.

For example, the solvent may include deionized water, and a dispersant may be used to uniformly disperse the lithium metal oxide particles. The dispersant is not particularly limited, and may include, e.g., (NaPO₃)₆.

A content of the dispersant based on a total weight of the dispersion may be in a range from about 0.2 wt% to about 0.5 wt%.

For example, the dispersion may be prepared by adding the dispersant and lithium metal oxide particles to a solvent and sonicating for about 1 to 2 minutes.

A refractive index of the dispersion may be in a range from about 1 to 2, e.g., from 1.3 to 1.4.

The laser diffraction particle size analyzer may include a sample circulator. The sample circulator can uniformly disperse various types of samples and transfer the samples to a measurement unit, thereby improving reliability of particle size analysis results.

The sample circulator may be operated under the following conditions.
- Number of Rinses: 1-5
- Deaerate Cycles: 1-5
- Background measurement duration: 10-30 s
- Sample measurement duration: 5-30 s

In example embodiments, D10 of the lithium metal oxide particles may be greater than 1.8 µm, and less than 3 µm. In some embodiments, D10 of the lithium metal oxide particles may be in a range from 2 µm and 2.6 µm.

In the above range, pores between the lithium metal oxide particles may be properly formed, and the battery with a high energy density may be achieved.

If D10 of the lithium metal oxide particles is 1.8 µm or less, the pores between the lithium metal oxide particles may be reduced to hinder electrolyte impregnation.

If D10 of the lithium metal oxide particles is 3 µm or more, the pores between the lithium metal oxide particles may be increased during a pressing process to reduce the electrode density, thereby reducing the energy density of the battery.

In example embodiments, D50 of the lithium metal oxide particles may be in a range from 3 µm to 5 µm. In some embodiments, D50 of the lithium metal oxide particles may be in a range from 3.5 µm to 4.5 µm, or from 3.7 µm to 4 µm.

In example embodiments, D90 of the lithium metal oxide particles may be in a range from 5 µm to 10 µm. In some embodiments, D90 of the lithium metal oxide particles may be in a range from 6 µm to 8 µm, or from 6.3 µm to 7.5 µm.

In example embodiments, Dmax of the lithium metal oxide particles may be in a range from 8 µm to 13 µm. In some embodiments, Dmax of the lithium metal oxide particles may be 9 µm to 12 µm, or 9.5 µm to 11.7 µm.

Dmax is a diameter of a particle having the largest diameter among particles, and may be a particle diameter at a point of D100 in the volume-cumulative particle size distribution.

A difference between the maximum particle diameter (Dmax) and the average particle diameter (D50) of the lithium metal oxide particles is in a range from 5 µm to 12 µm. In some embodiments, the difference between the maximum particle diameter (Dmax) and the average particle diameter (D50) of the lithium metal oxide particles may be in a range from 6 µm to 8 µm.

In the above range, the energy density of the cathode may be improved, and the battery having improved charge/discharge efficiency may be obtained.

If the difference between the maximum particle diameter (Dmax) and the average particle diameter (D50) of the lithium metal oxide particles is less than 5 µm, the particle size may become irregular and uniform power properties may not be implemented from the electrode.

If the difference between the maximum particle diameter (Dmax) and the average particle diameter (D50) of the lithium metal oxide particles exceeds 12 µm, the pores between the cathode active materials may become excessively large to lower the energy density of the cathode.

In example embodiments, the lithium metal oxide particles may include nickel, and may further include at least one of cobalt, manganese and aluminum.

Nickel may be provided as a transition metal associated with a power and a capacity of a lithium secondary battery. If a content of nickel is increased, a high-capacity cathode and a high-capacity lithium secondary battery may be provided. However, as the content of nickel content increases, long-term storage stability and life-span stability of the cathode or secondary battery may be relatively degraded, and side reactions with the electrolyte solution may also be increased.

However, according to embodiments, cobalt may be introduced to maintain electrical conductivity while improving life-span stability and capacity retention properties by including manganese.

The content of nickel may be 60 mol% or greater among elements in the lithium metal oxide particles excluding lithium and oxygen.

In some embodiments, the content of nickel may be 60 mol% or greater and less than 100 mol%, from 60 mol% to 99 mol%, or from 60 mol% to 80 mol% among elements in the lithium metal oxide particles excluding lithium and oxygen.

In some embodiments, the lithium metal oxide may include nickel, cobalt and manganese, and nickel, cobalt and manganese may serve as main active elements of the cathode active material.

In an embodiment, an auxiliary element may be further included in addition to the main active elements to enhance chemical stability of the cathode active material or a layered/crystal structure. The auxiliary element may be incorporated in the layered structure/crystal structure to form a bond.

The auxiliary element may include at least one selected from the group consisting of, e.g., Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may act as an auxiliary active element which may contribute to capacity/power activity of the cathode active material.

In example embodiments, the lithium metal oxide particles may further include cobalt, and a content of cobalt among the elements excluding lithium and oxygen included in the lithium metal oxide particles may be greater than 0 mol%, and 10 mol% or less. In some embodiments, the content of cobalt may be in a range from 5 mol% to 10 mol% among the elements excluding lithium and oxygen included in the lithium metal oxide particles.

The lithium metal oxide may include a layered structure or a crystal structure represented by Chemical Formula 1 below.

[Chemical Formula 1] LiₓNiₐM_{b}O_{2+z}

In Chemical Formula 1, 0.9≤x≤1.2, 0.6≤a≤0.99, 0.01≤b≤0.4, and -0.5≤z≤0.1. As described above, M may include Co, Mn and/or Al.

The chemical structure represented by Chemical Formula 1 may represent bonding relationship included in the layered structure or the crystal structure included in the cathode active material, and does not exclude other additional elements. For example, in Chemical Formula 1, M may include Co and/or Mn, and Co and/or Mn may serve as main active element of the cathode active material together with Ni. Chemical Formula 1 is provided to express the bonding relationship of the main active elements, and is to be understood as a formula encompassing introduction and substitution of the additional elements.

In some embodiments, the lithium metal oxide may include a layered structure or crystal structure represented by Chemical Formula 1-1.

[Chemical Formula 1-1] LiₓNiₐMl_{b1}M2_{b2}O_{2+z}

In Chemical Formula 1-1, M1 may include Co, Mn, and/or Al. M2 may include the auxiliary element described above. In Chemical Formula 1-1, 0.9≤x≤1.2, 0.6≤a≤1, 0≤b1≤0.1, 0≤b2≤0.3, and -0.5≤z≤0.1.

In some embodiments, the lithium metal oxide may further include a coating element or doping element. For example, elements substantially the same as or similar to the auxiliary elements described above may be used as the coating element or doping element. For example, the above elements may be used alone or in a combination of two or more therefrom as the coating element or doping element.

The coating element or doping element may be present on a surface of the lithium metal oxide particle, or may penetrate through the surface of the lithium metal oxide particle to be included in the bonding structure represented by Chemical Formula 1 or Chemical Formula 1-1.

In some embodiments, a tap density of the lithium metal oxide particles may be in a range from 2.1 g/cm³ to 3 g/cm³. In some embodiments, the tap density of the lithium metal oxide particles may be in a range from 2.2 g/cm³ to 2.5 g/cm³.

In example embodiments, a pellet density of the lithium metal oxide particles may be in a range from 3.15 g/cm³ to 4 g/cm³. In some embodiments, the pellet density of the lithium metal oxide particles may be in a range from 3.17 g/cm³ to 3.5 g/cm³. In the above ranges, the energy density of the battery can be improved while reducing a weight of cathode.

In example embodiments, the lithium nickel metal oxide particles may have a single particle structure. As used herein, the term "single particle structure" is intended to exclude a secondary particle formed by agglomeration of multiple primary particles (e.g., more than 10 particles) into one particle.

For example, the lithium nickel metal oxide particles may substantially consist of particles of the single particle structure or the single particle shape, and the secondary particle structure formed by aggregation or agglomeration of the primary particles may be excluded. The term "single particle structure" as used herein does not exclude, e.g., a structure in which 2 to 10 single particles are attached or adhered to each other to form a single body or a monolithic structure.

The single particle structure may also include a structure in which multiple primary particles are merged together and transformed into a substantially single particle.

For example, the lithium nickel metal oxide particles may have a single particle structure including 10 or fewer crystallites.

For example, the lithium nickel metal oxide particles may have a single crystalline structure. The single crystalline structure may include a structure in which one particle consists of one crystallite. For example, the single crystalline structure may be distinguished based on an ion image obtained by analyzing a cross-section of a particle using a focused ion beam (FIB). For example, if a particle has a single crystalline structure, a single crystal may be observed in the FIB analysis image based on differences in a crystal orientation.

In some embodiments, a cathode for a secondary battery includes a cathode current collector and a cathode active material layer disposed on a surface of the cathode current collector.

The cathode current collector may include, e.g., stainless steel, nickel, aluminum, titanium, copper, or an alloy thereof. For example, the cathode current collector may include aluminum or an aluminum alloy.

The cathode active material layer may be disposed on one or both surfaces of the cathode current collector, and include the above-described cathode active material for a secondary battery.

The cathode active material for a secondary battery may be mixed and stirred in a solvent with a binder, a conductive agent and/or a dispersant to prepare a slurry. The slurry may be coated on the cathode current collector, and then dried and pressed to form a cathode.

The binder may include, e.g., an organic binder such as vinylidene fluoride-hexafluoropropylene copolymer (PVDF-co-HFP), polyvinylidene fluoride (PVDF), polyacrylonitrile or polymethylmethacrylate, but is not limited thereto, an aqueous binder such as styrene-butadiene rubber (SBR) that may be used together with a thickener such as carboxymethyl cellulose (CMC).

For example, a PVDF-based binder may be used as the cathode binder. In this case, an amount of binder for forming the cathode active material layer may be reduced and an amount of the cathode active material may be relatively increased, thereby improving the power and the capacity of the secondary battery.

The conductive material may be included to promote electron transfer between the active material particles. For example, the conductive material may include a carbon-based conductive material such as graphite, carbon black, graphene or carbon nanotube, and/or a metal-based conductive material such as tin, tin oxide, titanium oxide, a perovskite material such as LaSrCoO₃, LaSrMnO₃, but is not limited thereto.

The solvent may include, e.g., N-methyl-2-pyrrolidone (NMP), dimethylformamide, dimethylacetamide, N,N-dimethylaminopropylamine, ethylene oxide, tetrahydrofuran., but is not limited thereto.

A lithium secondary battery according to embodiments includes the above-described cathode, and an anode opposing the cathode. The lithium secondary battery may further include a separator interposed between the cathode and the anode, and an electrolyte solution.

Hereinafter, a lithium secondary battery according to embodiments will be described in more detail with reference to the drawings. FIG. 1 and FIG. 2 are a schematic plan view and a schematic cross-sectional view, respectively, illustrating a lithium secondary battery according to embodiments. For example, FIG. 2 is a cross-sectional view taken along a line I-I' of FIG. 1.

Referring to FIGS. 1 and 2, a lithium secondary battery may include an electrode assembly including a cathode 100, an anode 130, and a separator 140 interposed between the cathode and the anode. The electrode assembly may be accommodated together with an electrolyte solution in a case 160 to be impregnated by the electrolyte solution.

The cathode 100 may include a cathode active material layer 110 coated on the cathode current collector 105. The above-described cathode may be applied in the lithium secondary battery.

The anode 130 may include an anode current collector 125 and an anode active material layer 120 formed by coating an anode active material on the anode current collector 125, and may further include an anode binder and a conductive material.

The anode active material may include a material capable of intercalating and deintercalating lithium ions known in the related art without any particular limitation. For example, a carbon-based material such as a crystalline carbon, an amorphous carbon, a carbon composite, a carbon fiber, etc.; a lithium alloy; a silicon-based compound, tin, but is not limited thereto, may be used.

Examples of the amorphous carbon may include hard carbon, coke, a mesocarbon microbead (MCMB), a mesophase pitch-based carbon fiber (MPCF), but is not limited thereto.

Examples of the crystalline carbon may include a graphite-based carbon such as natural graphite, a graphitized coke, a graphitized MCMB, a graphitized MPCF, but is not limited thereto. Elements included in the lithium alloy may include aluminum, zinc, bismuth, cadmium, antimony, silicon, lead, tin, gallium, indium, but is not limited thereto.

The silicon-based compound may include, e.g., silicon, silicon oxide, or a silicon-carbon composite compound such as silicon carbide (SiC).

In some embodiments, a content of the silicon-based compound may be in a range from 1 wt% to 20 wt%, from 1 wt% to 15 wt%, or from 1 wt% to 10 wt% based on a total weight of the anode active material.

The anode active material above may be mixed and stirred with a binder, a conductive material, a thickener and/or a dispersant in a solvent to prepare a slurry. The slurry may be coated on the anode current collector 125, dried and pressed to form the anode active material layer 120.

The coating process may include, e.g., a gravure coating, a slot die coating, a multilayer simultaneous die coating, an imprinting, a doctor blade coating, a dip coating, a bar coating, a casting, but is not limited thereto.

Non-limiting examples of the solvent include water, pure water, deionized water, distilled water, ethanol, isopropanol, methanol, acetone, n-propanol, t-butanol, but is not limited thereto.

The above-described materials that may be used in manufacturing the cathode may be used as the binder, the conductive material, and the thickener.

In some embodiments, a styrene-butadiene rubber (SBR)-based binder, carboxymethyl cellulose (CMC), a polyacrylic acid-based binder, poly(3,4-ethylenedioxythiophene), a PEDOT-based binder, but is not limited thereto, may be used as the anode binder.

The separator 140 may be interposed between the cathode 100 and the anode 130. The separator 140 may include a porous polymer film formed of a polyolefin-based polymer such as an ethylene homopolymer, a propylene homopolymer, an ethylene/butene copolymer, an ethylene/hexene copolymer, an ethylene/methacrylate copolymer, but is not limited thereto. The separator 140 may include a nonwoven fabric formed of a glass fiber having a high melting point, a polyethylene terephthalate fiber, but is not limited thereto.

In some embodiments, an area (e.g., a contact area with the separator 140) and/or a volume of the anode 130 may be larger than that of the cathode 100. Accordingly, transfer of lithium ions generated from the cathode 100 to the anode 130 may be facilitated without causing precipitation.

According to embodiments, an electrode cell may be defined by the cathode 100, the anode 130 and the separator 140, and a plurality of electrode cells may be stacked to form an electrode assembly 150 in the form of, e.g., a jelly roll. For example, the electrode assembly 150 may be formed by winding, stacking, folding, but is not limited thereto, of the separator 140.

The electrode assembly 150 may be accommodated in a case 160 together with an electrolyte solution according to the above-described embodiments to define a lithium secondary battery. In example embodiments, a non-aqueous electrolyte solution may be used as the electrolyte solution.

The non-aqueous electrolyte solution may include a lithium salt as the electrolyte and an organic solvent. For example, the lithium salt may be expressed as Li⁺X⁻, and examples of an anion (X-) of the lithium salt may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulfolane, gamma-butyrolactone, propylene sulfite, tetrahydrofuran, but is not limited thereto. These may be used alone or in a combination of two or more therefrom.

As illustrated in FIG. 1, electrode tabs (a cathode tab and an anode tab) included in each electrode cell may protrude from the cathode current collector 105 and the anode current collector 125, respectively, to extend to one side of the case 160. The electrode tabs may be fused together with the one side of the case 160 to be connected to an electrode lead (a cathode lead 107 and an anode lead 127) which are extended or exposed to an outside of the case 160.

For example, the lithium secondary battery may be manufactured in a cylindrical type using a can, a prismatic type, a pouch type, or a coin type.

The invention is also defined by the following aspects:
Aspect 1. A cathode active material for a secondary battery comprising lithium metal oxide particles,
   wherein a difference between a maximum particle diameter (Dmax) and an average particle diameter (D50) of the lithium metal oxide particles is in a range from 5 µm to 12 µm,
   D10 of the lithium metal oxide particles is greater than 1.8 µm and less than 3 µm, and
   D10 and D50 are particle diameter values at 10% and 50% of a cumulative volume of the lithium metal oxide particles, respectively, from analysis results of a volume cumulative particle size distribution of the lithium metal oxide particles by a laser diffraction method.
Aspect 2. The cathode active material for a secondary battery of aspect 1, wherein the difference between the Dmax and the D50 of the lithium metal oxide particles is in a range from 6 µm to 8 µm.
Aspect 3. The cathode active material for a secondary battery of aspect 1 or aspect 2, wherein the D10 of the lithium metal oxide particles is in a range from 2 µm to 2.6 µm.
Aspect 4. The cathode active material for a secondary battery of any one of aspects 1 to 3, wherein the Dmax of the lithium metal oxide particles is in a range from 8 µm to 13 µm.
Aspect 5. The cathode active material for a secondary battery of any one of aspects 1 to 4, wherein the D50 of the lithium metal oxide particles is in a range from 3 µm to 5 µm.
Aspect 6. The cathode active material for a secondary battery of any one of aspects 1 to 5, wherein the D90 of the lithium metal oxide particles is 5 µm to 10 µm,
   D90 is a particle diameter value at 90% of a cumulative volume of the lithium metal oxide particles from the analysis results of the volume cumulative particle size distribution of the lithium metal oxide particles by the laser diffraction method.
Aspect 7. The cathode active material for a secondary battery of any one of aspects 1 to 6, wherein the lithium metal oxide particles include nickel, and a content of nickel among elements excluding lithium and oxygen contained in the lithium metal oxide particles is at least 60 mol%.
Aspect 8. The cathode active material for a secondary battery of aspect 7, wherein the lithium metal oxide particles further include cobalt,
   wherein the content of nickel is 60 mol% or more, and less than 100 mol%, and a content of cobalt is greater than 0 mol%, and 10 mol% or less among the elements excluding lithium and oxygen contained in the lithium metal oxide particles.
Aspect 9. The cathode active material for a secondary battery of any one of aspects 1 to 8, wherein a tap density of the lithium metal oxide particles is in a range from 2.1 g/cm³ to 3 g/cm³.
Aspect 10. The cathode active material for a secondary battery of any one of aspects 1 to 9, wherein a pellet density of the lithium metal oxide particles is in a range from 3.15 g/cm³ to 4 g/cm³.
Aspect 11. The cathode active material for a secondary battery of any one of aspects 1 to 10, wherein the lithium metal oxide particles have a single particle structure.
Aspect 12. A cathode for a secondary battery, comprising:
   a cathode current collector; and
   a cathode active material layer on one or both surfaces of the cathode current collector, the cathode active material layer including the cathode active material for a secondary battery according to any one of aspects 1 to 11.
Aspect 13. A lithium secondary battery, comprising:
   the cathode for a secondary battery according to aspect 12; and
   an anode opposing the cathode.

### Examples and Comparative Examples

### Example 1

NiSO₄, CoSO₄ and MnSO₄ were mixed in a molar ratio of 0.60:0.10:0.30 using distilled water bubbled with N₂ for 24 hours to remove dissolved oxygen. The solution was placed in a reactor at 50°C, and a co-precipitation reaction was conducted for 72 hours using NaOH and NH₃.H₂O as a precipitant and a chelating agent, respectively, to obtain Ni_{0.60}Co_{0.10}Mn_{0.3}(OH)₂ as a transition metal precursor. The obtained precursor was dried at 100°C for 12 hours and then re-dried at 120°C for 10 hours.

Lithium hydroxide was added to the transition metal precursor in a dry high-speed mixer in a molar ratio of lithium:transition metal (nickel, cobalt and manganese) = 1.03:1 and mixed uniformly for 5 minutes. The mixture was placed in a furnace and heated to a a temperature in a range of 800 °C to 1000 °C at a rate of 2°C/min and maintained at the temperature for 10 hours. During heating and maintaining, oxygen was continuously passed through the furnace at a flow rate of 20 L/min. After the firing, the mixture was naturally cooled to room temperature, and then pulverized using a jet mill and classified to obtain lithium-nickel metal oxide particles having a composition of LiNi_{0.6}Co_{0.1}Mn_{0.3}O₂.

### Examples 2 to 4

Lithium metal oxide particles were prepared using the same method as that in Example 1, except that the molar ratio of nickel, cobalt and manganese were adjusted as shown in Table 1 below.

### Example 5 and Comparative Examples 1 to 4

Lithium metal oxide particles were prepared using the same method as that in Example 1, except that the molar ratio of nickel, cobalt and manganese were adjusted as shown in Table 1 below and that a pressure during the pulverizing process was changed.

### Evaluation Example

### (1) Particle size distribution analysis

A volume-cumulative particle size distribution of the lithium metal oxide particles was analyzed using a laser diffraction method with S3500 (Microtrac)/MASTERSIZER3000 (Malvern). Resulting particle diameter values (µm) at points representing 10%, 50%, 90%, or 100% of cumulative volumes are shown in Table 1.

The laser diffraction analysis was performed under the following conditions.
- Laser: 3x Red, wavelength 780 nm
- Solvent: Deionized water
- Dispersant: Na(PO₃)₆ 0.3 wt%
- Sonication: 1-2 min
- Dispersion refractive index: 1.333
- Number of Rinses: 1-5
- Deaerate Cycles: 1-5
- Background measurement duration: 10-30 s
- Sample measurement duration: 5-30 s

### (2) Pellet density measurement

1 g of the lithium metal oxide particles was filled into a cylindrical mold (pelletizer) having a diameter of 13 mm. A pressure of 8 kN was applied for 10 seconds, and a pelletizer height was measured. A pellet density (g/cm³) was calculated using a height difference from an initial empty pelletizer.

### (3) Tap density measurement

After filling a 25 ml-measurement cylinder with 10 g of the lithium metal oxide particles, the measurement cylinder was fixed to a tapping device, and tapping was performed 3,000 times with a stroke length of 10 mm. Thereafter, a tap density (g/cm³) was measured.

**[Table 1]**

| | composition (molar ratio) | particle size distribution analysis (µm) | | | | | density of cathode active material (g/cm³) | |
|---|---|---|---|---|---|---|---|---|
| | Ni/Co/Mn | D10 | D50 | D90 | Dmax | Dmax - D50 | tap density | pellet density |
| Example 1 | 60/10/30 | 2.2 | 3.9 | 6.3 | 9.8 | 6.0 | 2.28 | 3.17 |
| Example 2 | 62/07/31 | 2.1 | 3.8 | 6.5 | 9.9 | 6.1 | 2.48 | 3.30 |
| Example 3 | 64/06/30 | 2.0 | 3.7 | 6.6 | 11.2 | 7.5 | 2.49 | 3.32 |
| Example 4 | 68/07/25 | 2.2 | 3.8 | 7.1 | 11.7 | 7.9 | 2.50 | 3.34 |
| Example 5 | 64/06/30 | 2.6 | 4.0 | 6.8 | 11.1 | 7.1 | 2.48 | 3.26 |
| Comparative Example 1 | 60/10/30 | 1.8 | 3.9 | 7.3 | 12.7 | 8.8 | 2.04 | 3.10 |
| Comparative Example 2 | 62/07/31 | 3.0 | 3.8 | 6.3 | 13.0 | 8.7 | 2.12 | 3.01 |
| Comparative Example 3 | 64/06/30 | 2.0 | 3.8 | 7.6 | 16.3 | 12.5 | 2.18 | 3.12 |
| Comparative Example 4 | 68/07/25 | 2.3 | 4.1 | 7.0 | 8.8 | 4.8 | 1.96 | 2.98 |

### Fabrication of lithium secondary battery

A cathode slurry was prepared using the lithium metal oxide particles, Denka Black as a conductive material, and PVDF as a binder in a mass ratio of 93:5:2. The cathode slurry was coated on an aluminum current collector, and then dried and pressed to prepare a cathode

An anode slurry containing 93 wt% of natural graphite as an anode active material, 5 wt% of KS6 (a flake-type conductive material), 1 wt% styrene-butadiene rubber (SBR) as a binder, and 1 wt% carboxymethyl cellulose (CMC) as a thickener was coated on a copper substrate, dried, and pressed to prepare an anode.

The cathode and the anode were notched to proper sizes, and stacked with a separator (polyethylene, thickness: 12 µm) interposed therebetween. Tab portions of the cathode and the anode were welded. The welded cathode/separator/cathode assembly was placed in a pouch and sealed at three sides so that a side with an electrode tab was included in the sealed sides.

An electrolyte solution was injected through an unsealed side, the injection side was also sealed, and then impregnation was performed for at least 12 hours. A 1M LiPF₆ solution using a mixed solvent of ethylene carbonate (EC)/ethyl methyl carbonate (EMC) (20/80; volume ratio) was used as the electrolyte solution.

Pre-charge was performed for 50 minutes at a current of 0.24C (5A). After about 12 hours, degassing was performed. Aging was performed for 24 hours or more, and then formation charge/discharge cycles (charge conditions: CC-CV 0.24C, 4.3V, 0.05C cut-off; discharge conditions: CC 0.24C, 2.5V cut-off) were performed. The secondary battery was then further charged (charge conditions: CC-CV 0.24C, 4.3V, SOC 30% cut-off) for a product fabrication.

### Experimental Example

The batteries of Examples and Comparative Examples were evaluated as follows, and the results are shown in Table 2.

### (1) Measurement of discharge capacity

The above-fabricated batteries after the formation process were charged and discharged at 25°C under the following conditions (charge conditions: CC-CV 0.1C to 1C, 4.25V, 0.05C cut-off; discharge conditions: CC 0.1C to 1C, 2.5V cut-off), and then a discharge capacity (mAh/g) was measured.

### (2) Evaluation on charge and discharge efficiency

Charge and discharge capacities were measured using the same method as that in (1), and a ratio of the discharge capacity to the charge capacity was calculated as a percentage (%).

**[Table 2]**

| | Ni/Co molar ratio | discharge capacity (mAh/g) | charge/discharge efficiency (%) |
|---|---|---|---|
| Example 1 | 6 | 196.6 | 90.0 |
| Example 2 | 8.86 | 195.3 | 89.2 |
| Example 3 | 10.67 | 194.4 | 88.5 |
| Example 4 | 9.71 | 196.2 | 87.3 |
| Example 5 | 10.67 | 194.1 | 88.5 |
| Comparative Example 1 | 6 | 194.0 | 89.3 |
| Comparative Example 2 | 8.86 | 193.9 | 88.7 |
| Comparative Example 3 | 10.67 | 193.4 | 88.0 |
| Comparative Example 4 | 9.71 | 194.6 | 87.1 |

Referring to Table 2, the discharge capacity and the charge/discharge efficiency of the batteries according to Examples were improved compared to those of the batteries according to Comparative Examples having the same molar ratio of nickel to cobalt moles.

## Claims

1. A cathode active material for a secondary battery comprising lithium metal oxide particles,
wherein a difference between a maximum particle diameter (Dmax) and an average particle diameter (D50) of the lithium metal oxide particles is in a range from 5 µm to 12 µm,
D10 of the lithium metal oxide particles is greater than 1.8 µm and less than 3 µm, and
D10 and D50 are particle diameter values at 10% and 50% of a cumulative volume of the lithium metal oxide particles, respectively, from analysis results of a volume cumulative particle size distribution of the lithium metal oxide particles by a laser diffraction method.

2. The cathode active material for a secondary battery of claim 1, wherein the difference between the Dmax and the D50 of the lithium metal oxide particles is in a range from 6 µm to 8 µm.

3. The cathode active material for a secondary battery of claim 1 or claim 2, wherein the D10 of the lithium metal oxide particles is in a range from 2 µm to 2.6 µm.

4. The cathode active material for a secondary battery of any one of claims 1 to 3, wherein the Dmax of the lithium metal oxide particles is in a range from 8 µm to 13 µm.

5. The cathode active material for a secondary battery of any one of claims 1 to 4, wherein the D50 of the lithium metal oxide particles is in a range from 3 µm to 5 µm.

6. The cathode active material for a secondary battery of any one of claims 1 to 5, wherein the D90 of the lithium metal oxide particles is 5 µm to 10 µm,
D90 is a particle diameter value at 90% of a cumulative volume of the lithium metal oxide particles from the analysis results of the volume cumulative particle size distribution of the lithium metal oxide particles by the laser diffraction method.

7. The cathode active material for a secondary battery of any one of claims 1 to 6, wherein the lithium metal oxide particles include nickel, and a content of nickel among elements excluding lithium and oxygen contained in the lithium metal oxide particles is at least 60 mol%.

8. The cathode active material for a secondary battery of claim 7, wherein the lithium metal oxide particles further include cobalt,
wherein the content of nickel is 60 mol% or more, and less than 100 mol%, and a content of cobalt is greater than 0 mol%, and 10 mol% or less among the elements excluding lithium and oxygen contained in the lithium metal oxide particles.

9. The cathode active material for a secondary battery of any one of claims 1 to 8, wherein a tap density of the lithium metal oxide particles is in a range from 2.1 g/cm³ to 3 g/cm³.

10. The cathode active material for a secondary battery of any one of claims 1 to 9, wherein a pellet density of the lithium metal oxide particles is in a range from 3.15 g/cm³ to 4 g/cm³.

11. The cathode active material for a secondary battery of any one of claims 1 to 10, wherein the lithium metal oxide particles have a single particle structure.

12. A cathode for a secondary battery, comprising:
a cathode current collector; and
a cathode active material layer on one or both surfaces of the cathode current collector, the cathode active material layer including the cathode active material for a secondary battery according to any one of claims 1 to 11.

13. A lithium secondary battery, comprising:
the cathode for a secondary battery according to claim 12; and
an anode opposing the cathode.
